(19) Europäisches Patentamt
European Patent Office
Office européen des brevets

(11) Veröffentlichungsnummer: **0 324 415 A2**

# (12) EUROPÄISCHE PATENTANMELDUNG

(21) Anmeldenummer: **89100299.0**

(51) Int. Cl.⁴: **C09D 11/00**

(22) Anmeldetag: **10.01.89**

(30) Priorität: **15.01.88 DE 3800983**

(43) Veröffentlichungstag der Anmeldung: **19.07.89 Patentblatt 89/29**

(84) Benannte Vertragsstaaten: **CH DE FR GB IT LI**

(71) Anmelder: **BASF Aktiengesellschaft**
**Carl-Bosch-Strasse 38**
**D-6700 Ludwigshafen(DE)**

(72) Erfinder: **Bruder, Horst, Dr.**
**Dubliner Strasse 25**
**D-6700 Ludwigshafen(DE)**
Erfinder: **Mayer, Udo, Dr.**
**Max-Slevogt-Strasse 27**
**D-6710 Frankenthal(DE)**

## (54) Aufzeichnungsflüssigkeit für das Ink-Jet-Verfahren.

(57) Aufzeichnungsflüssigkeit für das Ink-Jet-Verfahren, enthaltend ein mit Wasser mischbares organisches Lösungsmittel und einen Farbstoff der Formel

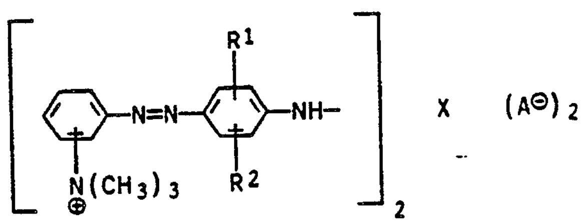

in der
$R^1$ und $R^2$ unabhängig voneinander Wasserstoff, $C_1$-$C_4$-Alkyl oder $C_1$-$C_4$-Alkoxy,
$A^{\ominus}$ ein Anion und
X ein Brückenglied der Formel

–CO– oder 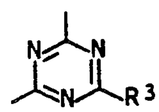

bedeuten, wobei $R^3$ die Bedeutung von Chlor, Hydroxy, $C_1$-$C_6$-Alkoxy, Amino, $C_1$-$C_4$-Mono- oder Dialkylamino, Anilino, N-($C_1$-$C_4$-Alkyl)anilino, Pyrrolidino, Piperidino, Morpholino, Piperazino oder N-($C_1$-$C_4$-Alkyl)-piperazino besitzt.

EP 0 324 415 A2

## Aufzeichnungsflüssigkeit für das Ink-Jet-Verfahren

Die vorliegende Erfindung betrifft eine neue Aufzeichnungsflüssigkeit für das Ink-Jet-Verfahren, enthaltend ein mit Wasser mischbares organisches Lösungsmittel und einen kationischen Azofarbstoff, dessen Diazokomponente sich von einem Diaminobenzolderivat und dessen Kupplungskomponente sich von Anilin oder einem Anilinderivat ableitet, wobei der Azofarbstoff mittels eines Brückengliedes verdoppelt ist.

Das Ink-Jet-Verfahren ist an sich bekannt. Dabei werden Tröpfchen einer Schreibflüssigkeit aus einer oder mehreren kleinen Düsen gezielt auf einen Träger, z.B. auf Papier, Holz, Textilien, Kunststoff oder Metall, geschossen. Durch elektronische Aussteuerung werden die einzelnen Tröpfchen zu Schriftzeichen oder graphischen Mustern zusammengefaßt.

Für das Ink-Jet-Verfahren geeignete Aufzeichnungsflüssigkeiten enthalten im allgemeinen als Farbmittel in Wasser und/oder organischen Lösungsmitteln lösliche Farbstoffe. Einige dieser Farbstoffe weisen jedoch Mängel in ihren anwendungstechnischen Eigenschaften, z.B. in der Wasserechtheit oder Schmierechtheit, auf.

Aufgabe der vorliegenden Erfindung war es deshalb, eine neue Aufzeichnungsflüssigkeit für das Ink-Jet-Verfahren bereitzustellen, wobei die darin enthaltenden Farbstoffe ein günstiges anwendungstechnisches Eigenschaftsprofil besitzen sollten.

Es wurde eine neue Aufzeichnungsflüssigkeit für das Ink-Jet-Verfahren gefunden, enthaltend Farbstoff und ein mit Wasser mischbares organisches Lösungsmittel, die dadurch gekennzeichnet ist, daß sie einen Farbstoff der Formel I

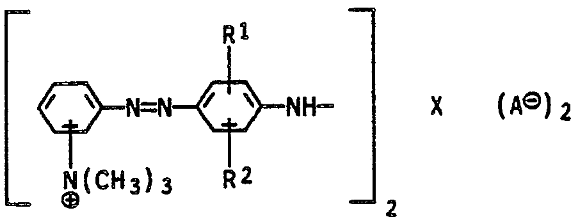 (I)

enthält, in der

$R^1$ und $R^2$ gleich oder verschieden sind und unabhängig voneinander jeweils Wasserstoff, $C_1$-$C_4$-Alkyl oder $C_1$-$C_4$-Alkoxy,

$A^\ominus$ ein Anion und

X ein Brückenglied der Formel

—CO— oder 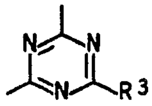

bedeuten, wobei $R^3$ die Bedeutung von Chlor, Hydroxy, $C_1$-$C_6$-Alkoxy, Amino, $C_1$-$C_4$-Mono- oder Dialkylamino, Anilino, N-($C_1$-$C_4$-Alkyl)anilino, Pyrrolidino, Piperidino, Morpholino, Piperazino oder N-($C_1$-$C_4$-Alkyl)-piperazino besitzt.

Alle in der obengenannten Formel auftretenden Alkylreste können sowohl geradkettig als auch verzweigt sein.

$R^1$ und $R^2$ sind beispielsweise Methyl, Ethyl, Propyl, Isopropyl, Butyl, Isobutyl, sec-Butyl, Methoxy, Ethoxy, Propoxy, Isopropoxy, Butoxy, Isobutoxy oder sec-Butoxy.

Anionen $A^\ominus$ leiten sich von anorganischen oder organischen Säuren ab und sind z.B. Fluorid, Chlorid, Bromid, Hydrogensulfat, Sulfat, Aminosulfat, Methosulfat, Ethosulfat, Perchlorat, Tetrafluoroborat, Trichlorozinkat, Methansulfonat, Benzolsulfonat, p-Toluolsulfonat, Formiat, Acetat, Propionat, Lactat, Benzoat, Oxalat oder Succinat.

$R^3$ bedeutet z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy, Mono- oder Dimethylamino, Mono- oder Diethylamino, Mono- oder Dipropylamino, Mono- oder Diisopropylamino, Mono- oder Dibutylamino, N-Methyl-N-ethylamino, N-Methylanilino, N-Ethylanilino, N-Methylpiperazino oder N-Ethylpiperazino.

Bevorzugt ist eine Aufzeichnungsflüssigkeit, die einen Farbstoff der Formel Ia

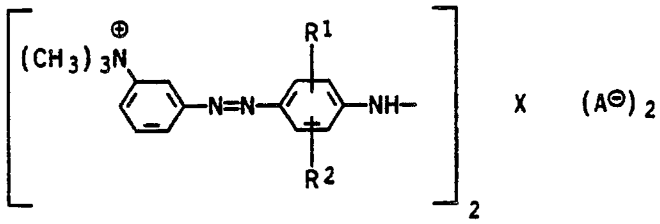

(Ia)

enthält, in der $R^1$, $R^2$, X und $A^\ominus$ jeweils die obengenannte Bedeutung besitzen.

Insbesondere sind solche Farbstoffe der Formel Ia hervorzuheben, in der $R^1$ und $R^2$ unabhängig voneinander jeweils Wasserstoff, Methyl oder Methoxy bedeuten.

Die Farbstoffe der Formel I sind größtenteils bekannt und beispielsweise in der DE-A-2 933 030 oder DE-A-2 933 031 beschrieben oder sie können nach den dort (loc.cit.) aufgeführten Methoden erhalten werden.

Die erfindungsgemäße Aufzeichnungsflüssigkeit für das Ink-Jet-Verfahren enthält einen oder mehrere Farbstoffe der Formel I und ein mit Wasser mischbares organisches Lösungsmittel.

Mit Wasser mischbare organische Lösungsmittel sind z.B. $C_1$-$C_4$-Alkanole, wie Methanol, Ethanol, Propanol, Isopropanol, Butanol, Isobutanol, sec-Butanol oder tert-Butanol, Carbonsäureamide, wie N,N-Dimethylformamid oder N,N-Dimethylacetamid, Lactame, wie N-Methylpyrrolid-2-on, cyclische Harnstoffe, wie 1,3-Dimethylimidazolidin-2-on, Ketone oder Ketoalkohole, wie Aceton, Methylethylketon oder 2-Methyl-2-hydroxypentan-4-on, Ether, wie Tetrahydrofuran oder Dioxan, Mono-, Oligo- oder Polyalkylenglykole oder -thioglykole, die $C_2$-$C_6$-Alkyleneinheiten aufweisen, wie Ethylenglykol, 1,2- oder 1,3-Propylenglykol, 1,2- oder 1,4-Butylenglykol, 1,6-Hexylenglykol, Diethylenglykol, Triethylenglykol, Thiodiglykol, Polyethylenglykol oder Polypropylenglykol, andere Polyole, wie Glycerin oder Hexan-1,2,6-triol, $C_1$-$C_4$-Alkylether von mehrwertigen Alkoholen, wie Ethylenglykolmonomethyl- oder -monoethylether, Diethylenglykolmonomethyl- oder -monoethylether oder Triethylenglykolmonomethyl- oder -monoethylether oder Dimethylsulfoxid.

Mit Wasser mischbare organische Lösungsmittel, die bevorzugt sind, sind beispielsweise N-Methylpyrrolidin-2-on, Mono-, Di- oder Trialkylenglykole, die $C_2$-$C_6$-Alkyleneinheiten aufweisen, insbesondere Mono-, Di- oder Triethylenglykol, oder Dimethylsulfoxid. Ganz besonders hervorzuheben sind N-Methylpyrrolidin-2-on, Diethylenglykol oder Dimethylsulfoxid.

Der Anteil des Farbstoffs der Formel I liegt in der Regel bei 2 bis 10 Gew.%, vorzugsweise 3 bis 5 Gew.%, jeweils bezogen auf das Gesamtgewicht der Aufzeichnungsflüssigkeit.

Bevorzugt ist eine Aufzeichnungsflüssigkeit, die neben dem Farbstoff der Formel I und einem mit Wasser mischbaren organischen Lösungsmittel zusätzlich noch Wasser enthält.

In diesem Fall enthält die erfindungsgemäße Aufzeichnungsflüssigkeit für das Ink-Jet-Verfahren im allgemeinen 50 bis 95 Gew.%, vorzugsweise 70 bis 95 Gew.%, jeweils bezogen auf das Gesamtgewicht des Lösungsmittelsystems, an Wasser.

Die neue Aufzeichnungsflüssigkeit kann weiterhin Hilfsmittel, beispielsweise Mittel zur Beeinflussung der Viskosität, wie Polyvinylchlorid oder Cellulosederivate, Tenside (nichtionisch, anionisch oder kationisch) oder Puffersysteme enthalten.

Die folgenden Beispiele sollen die Erfindung näher erläutern.

Allgemeine Herstellvorschrift für eine Aufzeichnungsflüssigkeit

4 bis 5 Gew.-Teile eines Farbstoffs, der nach dem an sich bekannten Verfahren der umgekehrten Osmose von Elektrolyten befreit worden ist, werden in 95 bis 96 Gew.-Teilen einer Flüssigkeit gelöst, deren Zusammensetzung in den nachfolgenden Beispielen angegeben ist. Die Lösung wird unter Druck durch ein Teflon-Filter der Porengröße 1 $\mu m$ filtriert und danach unter vermindertem Druck entgast.

Mit dieser Aufzeichnungsflüssigkeit wird das Aufnahmegefäß eines Tintenstrahl-Druckkopfes gefüllt, der unter dem Einfluß von zugeführter Wärme die Tinte tröpfchenförmig auswirft. Mit diesem Thermo-Ink-Jet-Druckkopf wird ein handelsübliches Papier, wie es für Maschinenschriften verwendet wird, bedruckt.

Die Abriebechtheit des erhaltenen Schriftbildes wird nach zwei Methoden geprüft:

Methode 1

Überstreichen der Schrift mit einem handelsüblichen Textmarker

Methode 2

Reiben einer beschriebenen Stelle mit einem angefeuchteten Finger

Die Echtheit des Schriftbildes wird im Rahmen einer von 5 bis 1 reichenden Skala bewertet, wobei 5 bedeutet, daß kein Ausbluten erfolgt, und 1 bedeutet, daß das Schriftbild so stark verschmiert, daß es nicht mehr erkennbar ist.

Zur Herstellung der Tinten wurden die in der Tabelle 1 beschriebenen Farbstoffe der Formel

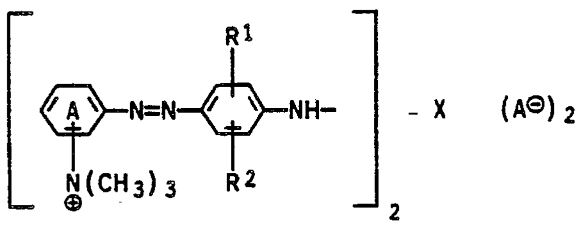

verwendet.

Tabelle 1

| Farbstoff Nr. | Position des Substituenten $\overset{\oplus}{N}(CH_3)_3$ in Ring A | $R^1$ | $R^2$ | X | $A^{\ominus}$ | Farbe |
|---|---|---|---|---|---|---|
| 1 | 3 | $2-OCH_3$ | $5-CH_3$ | CO | Chlorid | gelb |
| 2 | 3 | $2-OCH_3$ | H | CO | Chlorid | gelb |
| 3 | 3 | $2-OCH_3$ | $5-CH_3$ | 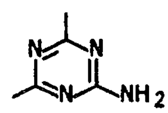 | Chlorid | gelb |
| 4 | 3 | H | $5-CH_3$ | 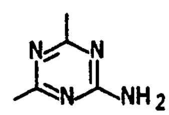 | Chlorid | gelb |

Die Farbstoffe Nr. 1 und 2 wurden dabei gemäß den Angaben der DE-A-2 933 030 (Beispiel 1 und 2) und die Farbstoffe Nr. 3 und 4 gemäß den Angaben der DE-A-2 933 031 (Beispiel 1) hergestellt.

Die Zusammensetzung der Tinten sowie die Bewertung der Abriebechtheit des Schriftbildes gehen aus der Tabelle 2 hervor. Die wassermischbaren Lösungsmittel Diethylenglykol oder N-Methyl-pyrrolidin-2-on sind mit DEG und NMP abgekürzt. W steht für Wasser.

Tabelle 2

| Anwendungsbeispiel Nr. | Farbstoff-Nr. | Anteil des Farbstoffs an der Aufzeichnungsflüssigkeit [Gew.%] | Zusammensetzung des Lösungsmittelsystems [Gew.-Teile] | Farbe | Echtheit nach | |
|---|---|---|---|---|---|---|
| | | | | | Methode 1 | Methode 2 |
| 1 | 1 | 4,5 | W:DEG = 9:1 | gelb | 5 | 4-5 |
| 2 | 2 | 5,0 | W:DEG = 9:1 | gelb | 5 | 5 |
| 3 | 3 | 4,0 | W:DEG:NMP = 8:1:1 | gelb | 4-5 | 4-5 |
| 4 | 4 | 4,0 | W:DEG:NMP = 8:1:1 | gelb | 5 | 4-5 |

## Ansprüche

1. Aufzeichnungsflüssigkeit für das Ink-Jet-Verfahren, enthaltend Farbstoff und ein mit Wasser mischbares organisches Lösungsmittel, dadurch gekennzeichnet, daß sie einen Farbstoff der Formel I

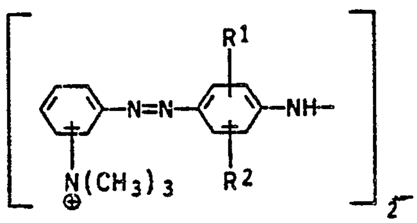 X $(A^{\ominus})_2$ (I)

enthält, in der
$R^1$ und $R^2$ gleich oder verschieden sind und unabhängig voneinander jeweils Wasserstoff, $C_1$-$C_4$-Alkyl oder $C_1$-$C_4$-Alkoxy,
$A^{\ominus}$ ein Anion und
X ein Brückenglied der Formel

—CO— oder 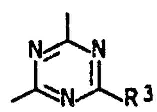

bedeuten, wobei $R^3$ die Bedeutung von Chlor, Hydroxy, $C_1$-$C_6$-Alkoxy, Amino, $C_1$-$C_4$-Mono- oder Dialkylamino, Anilino, N-($C_1$-$C_4$-Alkyl)anilino, Pyrrolidino, Piperidino, Morpholino, Piperazino oder N-($C_1$-$C_4$-Alkyl)-piperazino besitzt.

2. Aufzeichnungsflüssigkeit gemäß Anspruch 1, dadurch gekennzeichnet, daß sie einen Farbstoff der Formel Ia

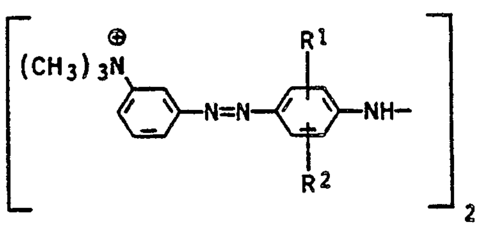 X $(A^{\ominus})_2$ (Ia)

enthält, in der $R^1$, $R^2$, X und $A^{\ominus}$ jeweils die in Anspruch 1 genannte Bedeutung besitzen.

3. Aufzeichnungsflüssigkeit gemäß Anspruch 1, dadurch gekennzeichnet, daß sie zusätzlich Wasser enthält.